# EUROPEAN PATENT APPLICATION

(11) **EP 4 813 210 A1**
(43) Date of publication of application: **30.09.2026**
(21) Application number: 24894196.5
(22) Date of filing: 21.11.2024
(51) Int. Cl.: A01N 25/00, A01N 43/50

(54) **AGENT FOR IMPROVING DAMAGE-RECOVERING PROPERTIES OF PLANT, PREPARATION FOR IMPROVING DAMAGE-RECOVERING PROPERTIES, METHOD FOR IMPROVING DAMAGE-RECOVERING PROPERTIES OF PLANT, PLANT BODY, AND AGENT FOR IMPROVING PHYSICAL STRESS RESISTANCE OF PLANT**

(30) Priority: 21.11.2023 JP 2023197535
(71) Applicant: Kureha Corporation, Chuo-ku Tokyo 103-8552 (JP)
(72) Inventor: JIMBO, Yusuke, Tokyo 103-8552 (JP); HIGASHIYAMA, Yukihiro, Tokyo 103-8552 (JP); TETSU, Naoki, Tokyo 103-8552 (JP); KOSHIYAMA, Tatsuyuki, Tokyo 103-8552 (JP)
(74) Representative: Hoefer & Partner Patentanwälte mbB
(86) International application number: PCT/JP2024/041235
(87) International publication number: WO 2025/110205

(57) **Abstract**

Provided is an improving agent for enhancing recoverability of a plant from a damage. An agent for improving damage recoverability of a plant, the agent including an active component which is a compound represented by Formula (I) below or its tautomer, or an agronomically acceptable salt thereof: 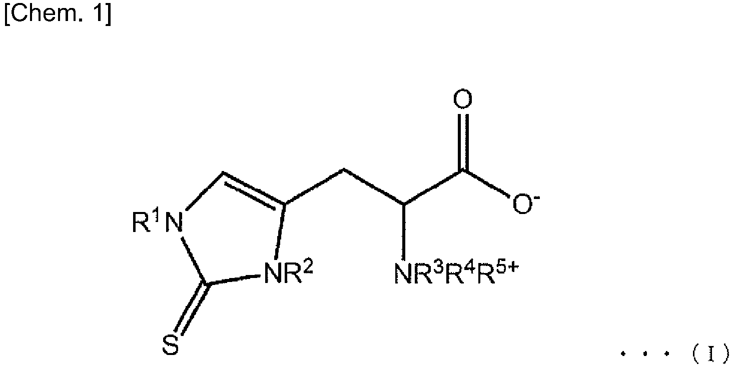 where in Formula (I), R¹ and R² each independently represent a hydrogen atom or an alkyl group having from 1 to 4 carbons, and R³, R⁴, and R⁵ each independently represent an alkyl group having from 1 to 4 carbons.

## Description

### [TECHNICAL FIELD]

The present invention relates to an agent for improving damage recoverability and a formulation for improving damage recoverability of a plant, a method for improving damage recoverability of a plant, a plant body, and an agent for improving physical stress tolerance of a plant.

### [BACKGROUND ART]

A method for alleviating abiotic stress and a method for promoting plant growth and increasing a crop yield by application of a chemical have been studied. For example, Patent Document 1 describes that glycine betaine has an action of alleviating stress, such as insufficient watering, on plants.

Patent Document 2 describes that application of an aqueous solution of ergothioneine to a sprouted plant body increases the plant height, the number of flowers and fruits, and the yield of seeds.

### [Citation List]

### [Patent Document]

Patent Document 1: WO 96/014749
Patent Document 2: WO 2021/005970

### [SUMMARY OF INVENTION]

### [Technical Problem]

As described in Patent Document 1 and Patent Document 2, to alleviate stress caused by a change in environmental factors such as insufficient watering and to improve a yield and quality of plants, it has been studied to apply a component having these effects to plants.

These techniques are directed to improving stress tolerance and promoting growth of healthy plants. On the other hand, a plant may be damaged by various physical factors. When recovery from the damage is delayed and the plant dies, for example, improvements in yield and quality cannot be expected.

The present invention is made in view of the above problems, and is directed to providing an improving agent for enhancing recoverability of a plant from a damage, a formulation containing the same, a method for improving damage recoverability of a plant by the same, a plant body treated by the same, and an agent for improving physical stress tolerance of a plant containing the same.

### [Solution to Problem]

An embodiment of the present invention for solving the above-described problems relates to an agent for improving damage recoverability and a formulation for improving damage recoverability of a plant, a method for improving damage recoverability of a plant, a plant body, and an agent for improving physical stress tolerance of a plant, as described in [1] to [8] below.
[1] An agent for improving damage recoverability of a plant, the agent including an active component which is a compound represented by Formula (I) below or its tautomer, or an agronomically acceptable salt thereof: 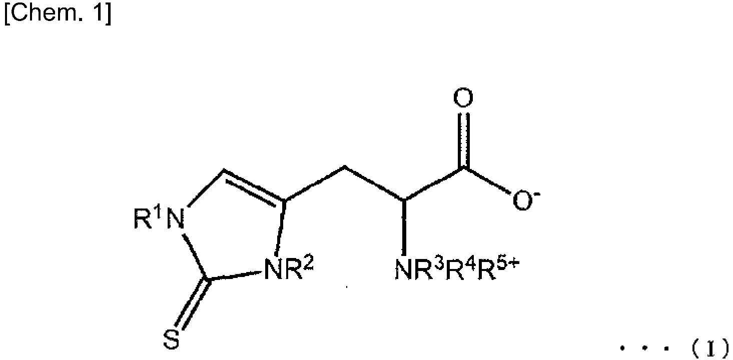 where in Formula (I), R¹ and R² each independently represent a hydrogen atom or an alkyl group having from 1 to 4 carbons, and R³, R⁴, and R⁵ each independently represent an alkyl group having from 1 to 4 carbons.
[2] The agent for improving damage recoverability of a plant according to [1], wherein
   the compound represented by Formula (I) is ergothioneine.
[3] A formulation for improving damage recoverability of a plant, the formulation including
   an active component which is a compound represented by Formula (I) below or its tautomer, or an agronomically acceptable salt thereof: 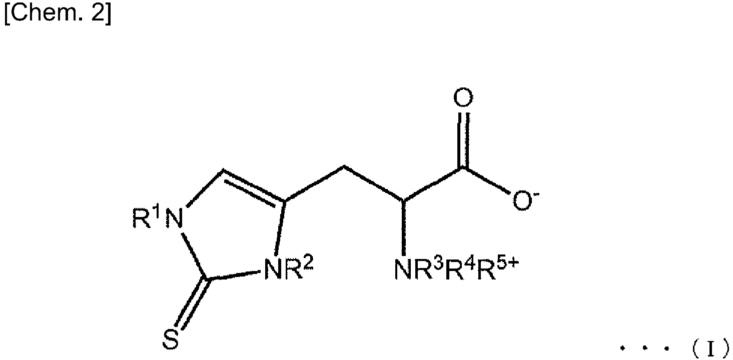 where in Formula (I), R¹ and R² each independently represent a hydrogen atom or an alkyl group having from 1 to 4 carbons, and R³, R⁴, and R⁵ each independently represent an alkyl group having from 1 to 4 carbons.
[4] A method for improving damage recoverability of a plant, the method including applying a treatment agent containing the formulation described in [3] to the plant.
[5] A plant body treated with a treatment agent containing the formulation described in [3] and having enhanced damage recoverability.
[6] The plant body according to [5], being
   a propagule or a transplanting seedling.
[7] The plant body according to [5] or [6], being
   turfgrass.
[8] An agent for improving physical stress tolerance of a plant, the agent including
   an active component which is a compound represented by Formula (I) below or its tautomer, or an agronomically acceptable salt thereof: 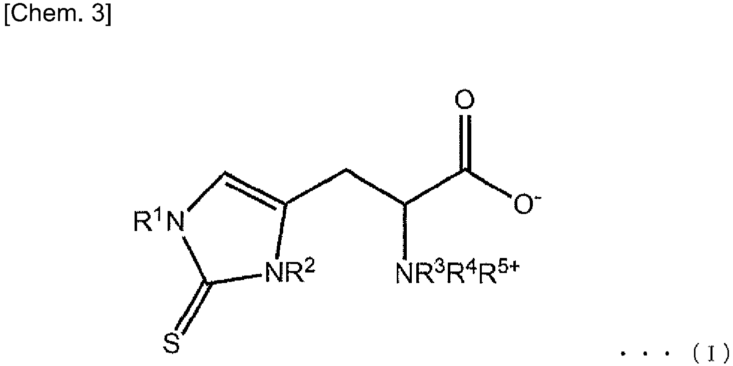
   where in Formula (I), R¹ and R² each independently represent a hydrogen atom or an alkyl group having from 1 to 4 carbons, and R³, R⁴, and R⁵ each independently represent an alkyl group having from 1 to 4 carbons.

### [Advantageous Effects of Invention]

According to the present invention, there are provided an improving agent for enhancing recoverability of a plant from a damage and a formulation containing the same, a method for improving damage recoverability of a plant by the same, a plant body treated by the same, and an agent for improving physical stress tolerance of a plant containing the same.

### [Description of Embodiments]

One embodiment of the present invention relates to an agent for improving damage recoverability of a plant, the agent including an active component which is a compound represented by Formula (I) below or its tautomer, or an agronomically acceptable salt thereof.

The active component is a compound represented by Formula (I) below or its tautomer, or an agronomically acceptable salt thereof. The agent for improving damage recoverability may contain only one kind of the active component or may contain a plurality of kinds of the active components. 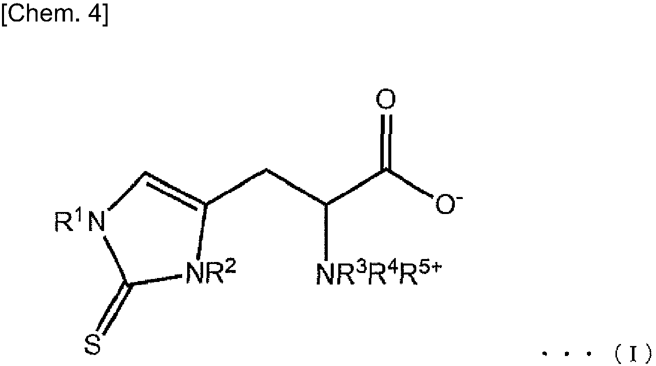 where in Formula (I), R¹ and R² each independently represent a hydrogen atom or an alkyl group having from 1 to 4 carbons, and R³, R⁴, and R⁵ each independently represent an alkyl group having from 1 to 4 carbons.

The alkyl group that can be included in R¹ to R⁵ may be linear or branched. Examples of the alkyl group that can be included in R¹ to R⁵ include a methyl group, an ethyl group, a propyl group, an isopropyl group, a butyl group, an isobutyl group, a sec-butyl group, and a tert-butyl group.

At least one of R¹ or R² is preferably a hydrogen atom, and more preferably both of them are hydrogen atoms. When R¹ and R² are alkyl groups, they are preferably methyl groups, ethyl groups or propyl groups, more preferably methyl groups or ethyl groups, and even more preferably methyl groups.

R³, R⁴, and R⁵ are each preferably independently a methyl group, an ethyl group, or a propyl group, more preferably a methyl group or an ethyl group, and even more preferably a methyl group. At least one of R³, R⁴, or R⁵ is preferably a methyl group, more preferably at least two of them are methyl groups, and even more preferably all of them are methyl groups.

When at least one of R¹ or R² is a hydrogen atom, the compound represented by Formula (I) has a tautomer. More specifically, when R² is a hydrogen atom, the compound represented by Formula (I) has a compound represented by Formula (II) below as a tautomer. When R¹ is a hydrogen atom, the compound represented by Formula (I) has a compound represented by Formula (III) below as a tautomer. Note that the term "tautomer" as used herein means both the compound represented by Formula (II) and the compound represented by Formula (III). 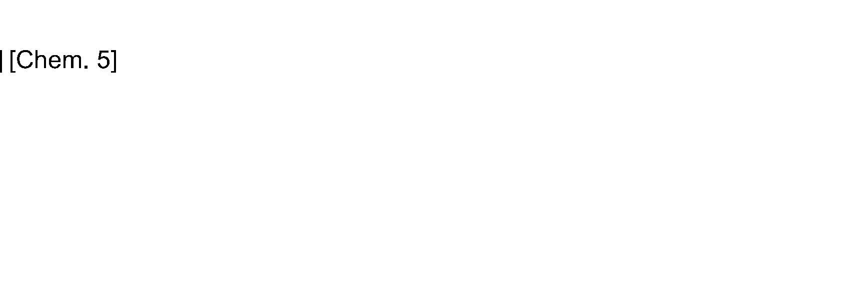 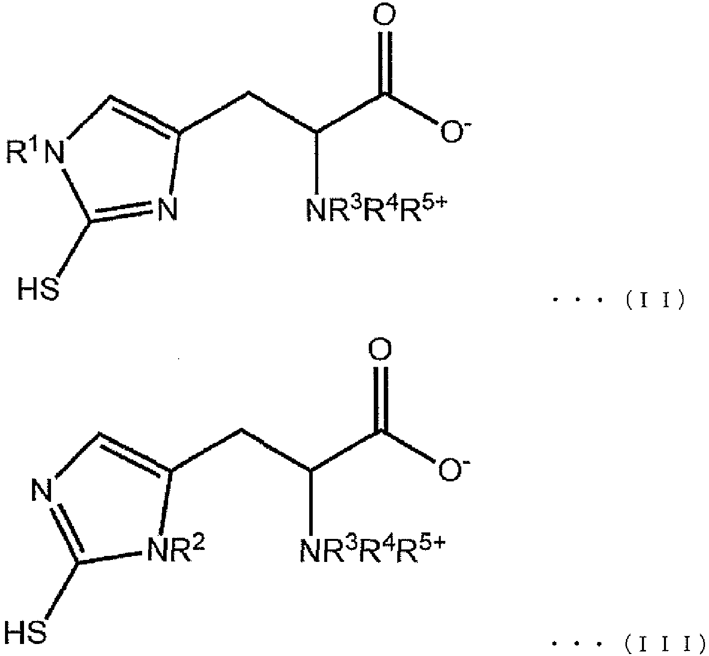 where in Formulas (II) and (III), R¹ to R⁵ are the same as R¹ to R⁵ in Formula (I).

Normally, in a solution, the compound represented by Formula (I) and the compound represented by Formula (II) or (III) can exist in equilibrium. A ratio of the compound represented by Formula (I) to the compound represented by Formula (II) or (III) can vary depending on the solvent, temperature, pH, or the like.

The compound represented by Formula (I) or its tautomer is preferably ergothioneine, and more preferably L-(+)-ergothioneine.

As these compounds, commercially available compounds thereof may be used, or those synthesized by a technique well known to those skilled in the art, for example, a method described in JP 2013-506706 T or JP 2006-160748 A may be used. Ergothioneine is known to be produced by bacteria and fungi. Examples of such a production method using a microorganism include methods described in JP 2012-105618 A, JP 2014-223051 A, WO 2016/104437, WO 2016/121285, WO 2015/168112, and WO 2017/150304. As ergothioneine, a culture containing ergothioneine and obtained from these microorganisms may be used, or ergothioneine obtained by concentrating or purifying the culture may be used.

"Agronomically acceptable" means that it is safe, non-toxic, and not undesired biologically or otherwise, but it is acceptable for pesticides, especially for pesticides that improve recoverability from a damage or physical stress tolerance of a plant.

The "agronomically acceptable salt" of the compound represented by Formula (I) or its tautomer is a salt that is agronomically acceptable as defined above, and means those capable of providing the action and effect of the compound represented by Formula (I) or its tautomer. Examples of such a salt include hydrates, solvates, acid addition salts, a salt formed when an acidic proton (proton acide) present in the compound represented by Formula (I) or its tautomer is substituted with a metal ion, and a salt formed when the acidic proton coordinates with an organic base or an inorganic base.

The acid addition salt may be formed with an inorganic acid or an organic acid. Examples of the inorganic acid include hydrochloric acid, hydrobromic acid, sulfuric acid, nitric acid, and phosphoric acid. Examples of the organic acid include acetic acid, benzenesulfonic acid, benzoic acid, camphorsulfonic acid, citric acid, ethanesulfonic acid, fumaric acid, glucoheptonic acid, gluconic acid, glutamic acid, glycolic acid, hydroxynaphthoic acid, 2-hydroxyethanesulfonic acid, lactic acid, maleic acid, malic acid, mandelic acid, methanesulfonic acid, muconic acid, 2-naphthalenesulfonic acid, propionic acid, salicylic acid, succinic acid, dibenzoyl-L-tartaric acid, tartaric acid, p-toluenesulfonic acid, trimethylacetic acid, and trifluoroacetic acid.

Examples of the metal ion capable of substituting the acidic proton present in the compound represented by Formula (I) or its tautomer include an alkali metal ion, an alkaline earth metal ion, and an aluminum ion.

Examples of the organic base capable of coordinating with the acidic proton present in the compound represented by Formula (I) or its tautomer include diethanolamine, ethanolamine, N-methylglucamine, triethanolamine, and tromethamine. Examples of the inorganic base capable of coordinating with the acidic proton present in the compound represented by Formula (I) or its tautomer include aluminum hydroxide, calcium hydroxide, potassium hydroxide, sodium carbonate, and sodium hydroxide.

The agent for improving damage recoverability according to the present embodiment remarkably improves the recoverability of a plant from a damage by the active component as an active ingredient. For example, turfgrass has a growing point near one third of the height of the grass from the top, and green leaves grow from the growing point. If the growing point is cut off when mowing the turfgrass, the turfgrass may not grow, leading to death. Similar growing points are present in various plants. Death due to cutting-off of the growing point can occur in any plant. On the other hand, the agent for improving damage recoverability according to the present embodiment can improve recoverability from a damage to suppress death due to the damage. In this example, the agent for improving damage recoverability also acts as a regeneration promoting agent of a growing point. A similar regeneration promoting effect of a growing point is expected for a variety of plants including various ground cover plants having stolons and runners. Examples of the ground cover plants having stolons include turfgrass, Dichondra, Phyla nodiflora, Phyla canescens, and Kurapia. Examples of the ground cover plants having runners include clover, creeping wire vine, and ivy.

For example, in a case of turfgrass, if the grass is mowed at a level lower than the growing point, the grass may not recover, leading to death. When the turfgrass grows and runs, the position of the growing point also becomes high, which makes it difficult to perform mowing in a manner to leave the growing point. For this reason, the turfgrass must be mowed frequently not to grow too much. On the other hand, when the above-described agent for improving damage recoverability is used, even if mowing is performed to remove the growing point to some extent, the turfgrass easily recovers, which makes it easy to maintain the function and landscape of the lawn. This also makes it possible to reduce the frequency of mowing to reduce the maintenance cost of the lawn. Such effects are similarly expected for various turfgrass varieties such as Korean grass, Hime Korean grass, Zoysia japonica, Zoysia tenuifolia Willd., TM9, Bermuda grass, Tifton turf, Weeping Lovegrass, bentgrass, Kentucky bluegrass, fescue, and ryegrass.

Examples of the damage from which recoverability is improved by the agent for improving damage recoverability include a damage due to mowing, damages due to feeding of insect pests, damages due to feeding of animals and plants, damages due to parasitism of animals and plants, damages due to contact with machinery (including rolling into wheels), damages due to contact with instruments (including game instruments such as a golf club, instruments such as horseshoes, and pruning instruments), and a damage due to exposure to electricity. The agent for improving damage recoverability improves a regeneration property of the plants treated therewith from these damages.

The agent for improving physical stress tolerance according to the present embodiment improves tolerance of a plant to physical stress by the active component as an active ingredient. Examples of the physical stress include foot pressure stress, hail stress, and strong wind stress. The agent for improving physical stress tolerance improves tolerance of a plant treated therewith to these stresses.

For example, in a school playground, a home garden, a park, a golf course, a ground, a racetrack, and the like, vegetation removal is likely to progress due to foot pressure stress. In this regard, when the agent for improving physical stress tolerance is used, it is easy to maintain turfgrass even in a lawn where vegetation removal is likely to progress, thereby making it easy to maintain the function and landscape of the lawn.

In addition, the agent for improving physical stress tolerance according to the present embodiment can improve tolerance to physical stress, thereby suppressing a decrease in plant yield, a decrease in quality, a decrease in plant height, a decrease in growth rate of plant height, a decrease in the number of flowers, a decrease in overground part weight, and a decrease in underground part weight, which are caused by physical stress.

The agent for improving damage recoverability and the agent for improving physical stress tolerance may be used for treatment of any plant. Examples of the plant include: Poaceae such as rice, wheat, barley, rye (triticale), oats, triticale, corn, sorghum, sugar cane, turf, bentgrass, bermudagrass, fescue, and ryegrass; Legumes such as soybean, peanut, kidney bean, pea, adzuki bean, and alfalfa; Convolvulaceae such as sweet potato; Solanaceae such as capsicum, sweet pepper, tomato, eggplant, potato, and tobacco; Polygonaceae such as buckwheat; Asteraceae such as sunflower; Araliaceae such as ginseng; Brassicaceae such as rapeseed, broccoli, Chinese cabbage, turnip, cabbage, rucola, Japanese radish, and radish; Chenopodiaceae such as sugar beet; Malvaceae such as cotton; Rubiaceae such as coffee tree; Sterculiaceae such as cacao; Theaceae such as tea; Cucurbitaceae such as watermelon, melon, cucumber, and pumpkin; Liliaceae such as onion, welsh onion, and garlic; Rosaceae such as strawberry, apple, almond, apricot, plum, yellow peach, Japanese plum, peach, and pear; Apiaceae such as carrot; Araceae such as taro; Anacardiaceae such as mango; Bromeliaceae such as pineapple; Caricaceae such as papaya; Ebenaceae such as persimmon; Ericaceae such as blueberry; Juglandaceae such as pecan; Musaceae such as banana; Oleaceae such as olive; Palmae such as coconut and date; Rutaceae such as mandarin orange, orange, grapefruit, and lemon; Vitaceae such as grape; ground cover plants such as turfgrass, Dichondra, Phyla nodiflora, Phyla canescens, kurapia, clover, creeping wire vine, and ivy; flowers and ornamental plants; trees other than fruit trees; and other ornamental plants.

The plant may be any of wild plants, cultivars, plants and cultivars bred by known hybridization or plasmogamy, and genetically recombinant plants and cultivars obtained by gene manipulation. Examples of the genetically recombinant plants and cultivars obtained by gene manipulation include herbicide-tolerant crops, pest-resistant crops in which an insecticidal protein-producing gene is recombined, pathogen-resistant crops in which a pathogen resistance derivative-producing gene is recombined, taste-improved crops, yield-improved crops, preservation-improved crops, and yield-improved crops. Examples of the genetically recombined cultivars that have been approved in each country include various cultivars accumulated in the database of the International Service for the Acquisition of Agri-biotech Applications (ISAAA). Specific examples thereof include cultivars under the trade names of: AgriSure, AgriSure 3000GT, AgriSure 3122 E-Z Refuge, AgriSure 3122 Refuge Renew, AgriSure Artesian 3030A, AgriSure Artesian 3011A, AgriSure Duracade, AgriSure Duracade 5222 E-Z Refuge, AgriSure GT, AgriSure GT/CB/LL, AgriSure RW, AgriSure Viptera 3110, AgriSure Viptera 3111, AgriSure Viptera 3220 E-Z Refuge, AgriSure Viptera 3220 Refuge Renew, BiteGard, Bollgard, Bollgard II, Bollgard II/Roundup Ready, Bollgard 3 XtendFlex Cotton, Bollgard Cotton, Bollgard/Roundup Ready Cotton, B.t., B.t/BXN Cotton, B.t. Maize, BtXtra, BXN, BXN Canola, BXN Cotton, Clearfield, DroughtGard, Enlist, Enlist Cotton, Enlist WideStrike 3 Cotton, Genuity, Genuity Bollgard II XtendFlex, Genuity Intacta RR2 Pro, Genuity SmartStax, Genuity SmartStax RIB Complete, Genuity VT Double Pro, Genuity VT Double Pro RIB Complete, Genuity VT Triple Pro, Genuity VT Triple Pro RIB Complete, GlyTol, GlyTol Cotton, Herculex, Herculex 1, Herculex RW, Herculex XTRA, IMI, IMI Canola, InVigor, KnockOut, Liberty Link, LibertyLink Conola, Liberty Link cotton, NatureGard, Newleaf, Nucotn, Optimum, Optimum AcreMax, Optimum AcreMax I, Optimum AcreMax-R, Optimum AcreMax RW, Optimum AcreMax RW-R, Optimum AcreMax Xtra-R, Optimum AcreMax Xtreme-R, Optimum AcreMax Xtreme, Optimum Intrasect, Optimum Intrasect Xtra, Optimum Intrasect Xtreme, Optimum Leptra, Optimum TRIsect, Poast Compatible, Powercore, Powercore Corn, Powercore Corn Refuge Advanced, Protecta, Roundup Ready, Roundup Ready 2, Roundup Ready Conola, Roundup Ready Cotton, Roundup Ready Xtend, Roundup Ready/YieldGard, RR Flex/Bollgard II, SCS, SmartStax, SmartStax Refuge Advanced, StarLink, Twinlink, VipCot, VipCot Cotton, WideStrike, WideStrike 3, YieldGard, YieldGard Corn Borner, YieldGard Rootworm, YieldGard Plus, and YieldGard VT Triple.

### Other Components

The agent for improving damage recoverability and the agent for improving physical stress tolerance can be distributed in the market as formulations of various forms that contain the active component as an active ingredient, and further contain other formulation aids or other active ingredients. The active component itself may be used as a formulation, or may be formulated in various forms together with other formulation aids or other active ingredients. The form is not particularly limited and may be selected depending on the treatment method. Examples of the form include a dustable powder, a granule, a dust-granule mixture, a wettable powder, a water soluble powder, an emulsifiable concentrate, a soluble concentrate, an oil miscible liquid/powder, an aerosol, a microcapsule suspension, a paste, a liniment, a smoke generator, a gas generator, and an ultra-low volume formulation.

### Formulation Aid

Examples of the formulation aid include a carrier, a surfactant, and other formulation aids.

The carrier may be a solid carrier or liquid carrier.

Examples of the solid carrier include various powder carriers and granular carriers including: minerals such as clay, talc, diatomaceous earth, zeolite, montmorillonite, bentonite, kaolinite, kaolin, pyrophyllite, agalmatolite, acid clay, activated clay, attapulgite, attapulgus clay, limestone, calcite, marble, vermiculite, perlite, pumice, silica stone, silica sand, sericite, and porcelain stone; synthetic organic substances such as urea; salts such as calcium carbonate, sodium carbonate, magnesium carbonate, sodium sulfate, ammonium sulfate, potassium chloride, slaked lime, and baking soda; synthetic inorganic substances such as amorphous silica (e.g., white carbon and fumed silica) and titanium dioxide; plant carriers such as wood flour, corn stalk (cob), walnut shell (nut shell), fruit core, rice hull, coconut shell, sawdust, bran, soy flour, powdered cellulose, starch, dextrin, and sugars (e.g., lactose and sucrose); and various polymeric carriers such as crosslinked lignin, cation gel, gelatin gelated by heat or a polyvalent metal salt, water-soluble polymer gel (e.g., agar), chlorinated polyethylene, chlorinated polypropylene, polyvinyl acetate, polyvinyl chloride, ethylene-vinyl acetate copolymers, and urea-aldehyde resins.

Examples of the liquid carrier include aliphatic solvents such as paraffins (normal paraffin, iso-paraffin, naphthene); aromatic solvents such as xylene, alkylbenzene, alkylnaphthalene, and solvent naphtha; mixed solvents such as kerosene; machine oils such as refined high-boiling point aliphatic hydrocarbons; alcohols such as methanol, ethanol, isopropanol, butanol, and cyclohexanol; polyhydric alcohols such as ethylene glycol, diethylene glycol, propylene glycol, dipropylene glycol, hexylene glycol, polyethylene glycol, and polypropylene glycol; polyhydric alcohol derivatives such as propylene-based glycol ether; ketones such as acetone, acetophenone, cyclohexanone, methylcyclohexanone, and γ-butyrolactone; esters such as fatty acid methyl ester (coconut oil fatty acid methyl ester), ethylhexyl lactate, propylene carbonate, and dibasic acid methyl ester (succinic acid dimethyl ester, glutamic acid dimethyl ester, and adipic acid dimethyl ester); nitrogen-containing solvents such as N-alkylpyrrolidones and acetonitrile; sulfur-containing solvents such as dimethyl sulfoxide; oils and fats such as coconut oil, soybean oil, and rapeseed oil; amide-based solvents such as dimethylformamide, N,N-dimethyloctaneamide, N,N-dimethyldecaneamide, methyl 5-(dimethylamino)-2-methyl-5-oxo-valerate, and N-acylmorpholine-based solvents (e.g., CAS No. 887947-29-7); and water.

As the surfactant, various surfactants such as nonionic surfactants, anionic surfactants, cationic surfactants, amphoteric surfactants, silicone-based surfactants, fluorosurfactants, and biosurfactants can be used.

Examples of the nonionic surfactant include sorbitan fatty acid esters, polyoxyethylene sorbitan fatty acid esters, sucrose fatty acid esters, polyoxyethylene fatty acid esters, polyoxyethylene resin acid esters, polyoxyethylene fatty acid diesters, polyoxyethylene alkyl ethers, polyoxyethylene alkylphenyl ethers, polyoxyethylene dialkyl phenyl ethers, polyoxyethylene alkyl phenyl ether formalin condensates, polyoxyethylene/polyoxypropylene block polymers, alkyl polyoxyethylene/polyoxypropylene block polymer ethers, alkyl phenyl polyoxyethylene/polyoxypropylene block polymer ethers, polyoxyethylene alkylamines, polyoxyethylene fatty acid amides, polyoxyethylene fatty acid bisphenyl ethers, polyoxyethylene benzylphenyl (or phenylphenyl) ethers, polyoxyethylene styrylphenyl (or phenylphenyl) ethers, polyoxyethylene castor oils, polyoxyethylene hydrogenated castor oils, and alkyl glycosides.

Examples of the anionic surfactant include sulfates such as alkyl sulfates, polyoxyethylene alkyl ether sulfates, polyoxyethylene alkylphenyl ether sulfates, polyoxyethylene benzyl (or styryl) phenyl (or phenylphenyl) ether sulfates, and polyoxyethylene/polyoxypropylene block polymer sulfates; sulfonates such as paraffin (alkane) sulfonates, α-olefin sulfonates, dialkyl sulfosuccinates, alkylbenzene sulfonates, mono- or dialkyl naphthalene sulfonates, naphthalene sulfonate-formalin condensates, alkyl diphenyl ether disulfonates, lignin sulfonates, polyoxyethylene alkyl phenyl ether sulfonates, and polyoxyethylene alkyl ether sulfosuccinic acid half esters; carboxylates such as fatty acids, resin acids, polycarboxylic acids, alkyl ether carboxylates, alkenyl succinic acids, N-acylamino acids, and naphthenic acids; and phosphates such as polyoxyethylene alkyl ether phosphates, polyoxyethylene mono- or dialkyl phenyl ether phosphates, polyoxyethylene benzyl (or styryl) phenyl (or phenylphenyl) ether phosphates, polyoxyethylene/polyoxypropylene block polymer phosphates, and alkyl phosphates.

Examples of the cationic surfactant include salts of amines such as alkylamines and alkyl pentamethyl propylene diamine; and salts of ammoniums such as alkyltrimethylammonium, methyl polyoxyethylene alkylammonium, alkyl pyridinium, mono- or di-alkyl methylated ammonium, alkyl dimethyl benzalkonium, and benzethonium (octylphenoxyethoxyethyl dimethylbenzyl ammonium).

Examples of the amphoteric surfactant include dialkyldiamino ethyl betaines, alkyldimethyl benzyl betaines, and lecithins (such as phosphatidylcholine and phosphatidylethanolamine).

Examples of the silicone-based surfactant include trisiloxane ethoxylates.

Examples of the fluorosurfactant include perfluoroalkyl carboxylates, perfluoroalkyl sulfonates, and perfluoroalkyl trimethylammonium salts.

Examples of the biosurfactant include sophorolipids, rhamnolipids, trehalose lipids, mannosyl alditol lipids, cellobiose lipids, glucose lipids, oligosaccharide fatty acid esters, spiculisporic acids, corynomycolic acids, agaricic acids, surfactin, serrawettin, viscosin, lichenysin, arthrofactin, emulsan, and alasan.

Examples of the other formulation aids include inorganic salts used as pH adjusters (e.g., sodium or potassium); water-soluble salts such as common salt; xanthan gum, guar gum, carboxymethyl cellulose, polyvinylpyrrolidone, carboxyvinyl polymers, acrylic polymers, polyvinyl alcohols, starch derivatives, water-soluble polymers (e.g., polysaccharides), alginic acid and salts thereof, which are used as thickeners; metal stearates, sodium tripolyphosphate, and sodium hexametaphosphate, which are used as disintegrating dispersants; benzoic acid and salts thereof, sorbic acid and salts thereof, propionic acid and salts thereof, p-hydroxybenzoic acid, methyl p-hydroxybenzoate, and 1,2-benzothiazolin-3-one, which are used as preservatives; sodium polyphosphate, sodium polyacrylate, sodium ligninsulfonate, sodium citrate, sodium gluconate/glucoheptonate, ethylene diamine tetraacetic acid and disodium and ammonium salts thereof, which are used as sequesterants; pigments and dyes used as colorants; fluorine-based defoamers, silicone-based defoamers, and ethylene oxide/propylene oxide copolymers, which are used as defoamers; phenol-based antioxidants, amine-based antioxidants, sulfur-based antioxidants, and phosphoric acid-based antioxidants, which are used as antioxidants; salicylic acid-based UV absorbers and benzophenone-based UV absorbers, which are used as UV absorbers; quicklime and magnesium oxide, which are used as desiccants; and adjuvants, chemical damage reducers, and deterioration inhibitors.

### Other Active Ingredients

Examples of the other active ingredients include active ingredients contained in biostimulants, plant growth regulators, fungicides, insecticides, miticides, nematicides, and herbicides. Note that when another biostimulant is used in combination with the agent for improving damage recoverability or the agent for improving physical stress tolerance, it is also possible to further enhance tolerance to various abiotic stresses or to enhance the growth promoting effect.

Examples of the biostimulants include seaweed extract, corn extract, microalgae, mycorrhizal fungus, humic acid, fulvic acid, oxidized glutathione, L-proline, glycine betaine, 5-aminolevulinic acid, 2-hexenal, trehalose, silicic acid, nicotinic acid, acetic acid, and ethanol.

Examples of the plant growth regulators include aminoethoxyvinylglycine, chlormequat, chlorpropham, cyclanilide, dikegulac, daminozide, ethephon, flurprimidol, flumetralin, forchlorfenuron, gibberellin, mepiquat chloride, methylcyclopropene, benzylaminopurine, paclobutrazol, prohexadione, thidiazuron, tributylphosphorotrithioate, trinexapac-ethyl, uniconazole, sodium 1-naphthaleneacetate, 1-naphthylacetamide, 1-methylcyclopropene, 4-chlorophenoxyacetic acid (4-CPA), ethyl 2-methyl-4-chlorophenoxybutyrate (MCPB), isoprothiolane, indolebutyric acid, ethychlozate, calcium formate, chlormequat, choline, cyanamide, dichlorprop, decyl alcohol, sorbitan trioleate, nicosulfuron, pyraflufen-ethyl, butralin, prohydrojasmon, anisifluprin, and pendimethalin.

Examples of the fungicides include nucleic acids metabolism inhibitors, fungicides acting on cytoskeleton and motor proteins, respiration inhibitors, amino acids and protein synthesis inhibitors, signal transduction inhibitors, lipid synthesis or transport/membrane integrity or function inhibitors, membrane sterol biosynthesis inhibitors, cell wall biosynthesis inhibitors, melanin synthesis inhibitors, host plant defense inducers, chemical multi-site inhibitors, and biopesticides/agrochemicals of biological origin with multiple modes of action.

Specific examples of the nucleic acids metabolism inhibitors include benalaxyl, benalaxyl-M or kiralaxyl, furalaxyl, metalaxyl, metalaxyl-M or mefenoxam, ofurace, oxadixyl, bupirimate, dimethirimol, ethirimol, hymexazol, octhilinone, and oxolinic acid.

Examples of the fungicides acting on cytoskeleton and motor proteins include benomyl, carbendazim, fuberidazole, thiabendazole, thiophanate, thiophanate-methyl, diethofencarb, ethaboxam, pencycuron, zoxamide, fluopicolide, fluopimomide, phenamacril, metrafenone, and pyriofenone.

Examples of the respiration inhibitors include diflumetorim, fenazaquin, tolfenpyrad, benodanil, benzovindiflupyr, bixafen, boscalid, carboxin, fenfuram, flubeneteram, fluindapyr, fluopyram, flutolanil, fluxapyroxad, furametpyr, inpyrfluxam, isofetamid, isoflucypram, isopyrazam, mepronil, oxycarboxin, penflufen, penthiopyrad, pydiflumetofen, pyrapropoyne, pyraziflumid, sedaxane, thifluzamide, azoxystrobin, coumoxystrobin, dimoxystrobin, enestrobin, enoxastrobin, famoxadone, fenamidone, fenaminstrobin, flufenoxystrobin, fluoxastrobin, kresoxim-methyl, mandestrobin, metominostrobin, metyltetraprole, orysastrobin, picoxystrobin, pyraclostrobin, pyrametostrobin, pyraoxystrobin, pyribencarb, triclopyricarb, trifloxystrobin, amisulbrom, cyazofamid, fenpicoxamid, florylpicoxamid, metarylpicoxamid, binapacryl, dinocap, fluazinam, meptyldinocap, fentin acetate, fentin chloride, fentin hydroxide, silthiofam, and ametoctradin.

Examples of the amino acids and protein synthesis inhibitors include cyprodinil, mepanipyrim, pyrimethanil, blasticidin-S, kasugamycin, streptomycin, and oxytetracycline.

Examples of the signal transduction inhibitors include proquinazid, quinoxyfen, fludioxonil, chlozolinate, dimetachlone, fenpiclonil, iprodione, procymidone, and vinclozolin.

Examples of the lipid synthesis or transport/membrane integrity or function inhibitors include edifenphos (EDDP), iprobenfos (IBP), isoprothiolane, pyrazophos, biphenyl, chloroneb, dicloran (CNA), etridiazole, quintozene (PCNB), tecnazene (TCNB), tolclofos-methyl, iodocarb, propamocarb, prothiocarb, extracts of Melaleuca alternifolia (tea tree), plant oil mixtures (eugenol, geraniol, thymol), natamycin (pimaricin), fluoxapiprolin, and oxathiapiprolin.

Examples of the membrane sterol biosynthesis inhibitors include azaconazole, bitertanol, bromuconazole, cyproconazole, difenoconazole, diniconazole, epoxiconazole, etaconazole, fenbuconazole, fluoxytioconazole, fluquinconazole, flusilazole, flutriafol, hexaconazole, imazalil, imibenconazole, ipconazole, ipfentrifluconazole, mefentrifluconazole, metconazole, myclobutanil, oxpoconazole, pefurazoate, penconazole, prochloraz, propiconazole, prothioconazole, simeconazole, tebuconazole, tetraconazole, triadimefon, triadimenol, triflumizole, triticonazole, fenarimol, nuarimol, pyrifenox, pyrisoxazole, triforine, methyl-(2RS)-2-[2-chloro-4-(4-chlorophenoxy)phenyl]-2-hydroxy-3-(1H-1,2,4-triazol-1-yl)propanoate, 1-((1H-1,2,4-triazol-1-yl)methyl)-5-(4-chlorobenzyl)-2-(chloromethyl)-2-methylcyclopentan-1-ol, methyl 2-((1H-1,2,4-triazol-1-yl)methyl)-3-(4-chlorobenzyl)-2-hydroxy-1-methylcyclopentane-1-carboxylate, aldimorph, dodemorph, fenpropimorph, tridemorph, fenpropidin, piperalin, spiroxamine, fenhexamid, fenpyrazamine, pyributicarb, naftifine, and terbinafine.

Examples of the cell wall biosynthesis inhibitors include polyoxin, benthiavalicarb (benthiavalicarb-isopropyl), dimethomorph, flumorph, iprovalicarb, mandipropamid, pyrimorph, and valifenalate.

Examples of the melanin synthesis inhibitors include fthalide, pyroquilon, tricyclazole, carpropamid, diclocymet, fenoxanil, and tolprocarb.

Examples of the host plant defense inducers include acibenzolar-S-methyl, probenazole, tiadinil, isotianil, laminarin, Reynoutria sachalinensis extracts, Bacillus mycoides isolate J, cell wall of Saccharomyces cerevisiae strain LAS117, fosetyl (fosetyl-aluminum, fosetyl potassium, fosetyl sodium), phosphoric acid and salts thereof, and dichlobentiazox.

Examples of the chemical multi-site inhibitors include ferbam, mancozeb, maneb, metiram, propineb, thiuram, zinc thiazole, zineb, ziram, amobam, anilazine, dithianon, dichlofluanid, tolylfluanid, guazatine, iminoctadine acetate, iminoctadine albesilate, copper or various copper salts (e.g., copper oxychloride, copper (II) hydroxide, basic copper sulfate, copper sulfate, organocopper (oxine-copper), copper nonylphenolsulfonate, DBEDC), sulfur, captan, captafol, folpet, chlorothalonil (TPN), quinoxaline (chinomethionat), fluoroimide, and methasulfocarb.

Examples of the biopesticides/agrochemicals of biological origin with multiple modes of action include Bacillus subtilis strain AFS032321, Bacillus amyloliquefaciens strain QST713, Bacillus amyloliquefaciens strain FZB24, Bacillus amyloliquefaciens strain MBI600, Bacillus amyloliquefaciens strain D747, Bacillus amyloliquefaciens strain F727, Clonostachys rosea strain CR-7, Gliocladium catenulatum strain J1446, Pseudomonas chlororaphis strain AFS009, Streptomyces griseoviridis strain K61, Streptomyces lydicus strain WYEC108, Trichoderma atroviride strain I-1237, Trichoderma atroviride strain LU132, Trichoderma atroviride strain SC1, Trichoderma asperellum strain T34, extracts from Swinglea glutinosa, and extracts from the cotyledons of lupine plantlets (BLAD).

Examples of other compounds for use in fungicides include chloroinconazide, seboctylamine, flumetylsulforim, flufenoxadiazam, cyflufenamid, cymoxanil, diclomezine, dipymetitrone, dodine, fenitropan, ferimzone, flusulfamide, flutianil, harpin, inorganic salts (hydrogencarbonates (sodium hydrogencarbonate, potassium hydrogencarbonate), potassium carbonate), ipflufenoquin, KINOPROL, materials of biological origin, machine oils, organic oils, picarbutrazox, pyridachlometyl, quinofumelin, tebufloquin, tecloftalam (bactericides), triazoxide, validamycin, aminopyrifene, and shiitake mycelial extract.

Examples of the insecticides include acetylcholinesterase (AChE) inhibitors, GABA-gated chloride channel blockers, sodium channel modulators, nicotinic acetylcholine receptor (nAChR) competitive modulators, nicotinic acetylcholine receptor (nAChR) allosteric modulators, glutamate-gated chloride channel (GluCl) allosteric modulators, juvenile hormone mimics, miscellaneous non-specific (multi-site) inhibitors, chordotonal organ TRPV channel modulators, mite growth inhibitors affecting CHS1, microbial disruptors of insect midgut membranes, inhibitors of mitochondrial ATP synthase, uncouplers of oxidative phosphorylation via disruption of proton gradient, nicotinic acetylcholine receptor (nAChR) channel blockers, inhibitors of chitin biosynthesis affecting CHS1, inhibitors of chitin biosynthesis (type 1), molting disruptors (dipteran), molting hormone (ecdysone) receptor agonists, octopamine receptor agonists, mitochondrial complex III electron transport inhibitors, mitochondrial complex I electron transport inhibitors (METI), voltage-dependent sodium channel blockers, inhibitors of acetyl CoA carboxylase, mitochondrial complex IV electron transport inhibitors, mitochondrial complex II electron transport inhibitors, ryanodine receptor modulators, chordotonal organ modulators, GABA-gated chloride channel allosteric modulators, and baculoviruses.

Specifically, examples of the acetylcholinesterase (AChE) inhibitors include alanycarb, aldicarb, bendiocarb, benfuracarb, butocarboxim, butoxycarboxim, carbaryl (NAC), carbofuran, carbosulfan, ethiofencarb, fenobucarb (BPMC), fenothiocarb, formetanate, furathiocarb, isoprocarb (MIPC), methiocarb, methomyl, metolcarb (MTMC), oxamyl, pirimicarb, propoxur (PHC), thiodicarb, thiofanox, triazamate, trimethacarb, XMC, xylylcarb (MPMC), acephate, azamethiphos, azinphos-ethyl, azinphos-methyl, cadusafos, chlorethoxyfos, chlorfenvinphos (CVP), chlormephos, chlorpyrifos, chlorpyrifos-methyl, coumaphos, cyanophos (CYAP), demeton-S-methyl, diazinon, dichlorvos (DDVP), dicrotophos, dimethoate, dimethylvinphos, ethylthiomethon (disulfoton), EPN, ethion, ethoprophos, famphur, fenamiphos, fenitrothion (MEP), fenthion (MPP), fosthiazate, heptenophos, imicyafos, isofenphos, isopropyl O-(methoxyaminothiophosphoryl)salicylate, isoxathion, malathon (malathion), mecarbam, methamidophos, methidathion (DMTP), mevinphos, monocrotophos, naled (BRP), omethoate, oxydemeton-methyl, parathion, methyl parathion (parathion-methyl), phenthoate (PAP), phorate, phosalone, phosmet (PMP), phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos (CVMP), thiometon, triazophos, trichlorfon (DEP), and vamidothion.

Examples of the GABA-gated chloride channel blockers include chlordane, benzoepin (endosulfan), dienochlor, ethiprole, fipronil, pyriprole, and nicofluprole.

Examples of the sodium channel modulators include acrinathrin, allethrin (allethrin, d-cis-trans-, d-trans-isomers), bifenthrin, bioallethrin (bioallethrin, S-cyclopentenyl-isomers), bioresmethrin, chloroprallethrin, chlorfenson, cycloprothrin, cyfluthrin (cyfluthrin, β-isomers), cyhalothrin (cyhalothrin, λ-, γ-isomers), cypermethrin (cypermethrin, α-, β-, θ-, ζ-isomers), cyphenothrin [(1R)-trans-isomers], deltamethrin, dimefluthrin, empenthrin [(EZ)-(1R)-isomers], esfenvalerate, etofenprox, fenpropathrin, fenvalerate, flubrocythrinate, flucythrinate, flumethrin, fluvalinate (τ-fluvalinate), halfenprox, imiprothrin, kadethrine, metofluthrin, momfluorothrin, epsilon-metofluthrin, epsilon-momfluorothrin, permethrin, phenothrin [(1R)-trans isomer], prallethrin, profluthrin, pyrethrin, resmethrin, silafluofen, tefluthrin, phthalthrin (tetramethrin), tetramethrin [(1R)-isomers], tralomethrin, transfluthrin, DDT, methoxychlor, aldrin, dieldrin, and lindane (lindene).

Examples of the nicotinic acetylcholine receptor (nAChR) competitive modulators include acetamiprid, clothianidin, dinotefuran, imidacloprid, nitenpyram, thiacloprid, thiamethoxam, nicotine sulfate (nicotine), sulfoxaflor, flupyradifurone, dicloromezotiaz, fenmezoditiaz, and triflumezopyrim.

Examples of the nicotinic acetylcholine receptor (nAChR) allosteric modulators include spinetoram, spinosad, flupyrimin, and GS-omega/kappa HXTX-Hv1a peptide.

Examples of the glutamate-gated chloride channel (GluCl) allosteric modulators include abamectin, emamectin benzoate, lepimectin, and milbemectin.

Examples of the juvenile hormone mimics include hydroprene, kinoprene, methoprene, fenoxycarb, and pyriproxyfen.

Examples of the miscellaneous non-specific (multi-site) inhibitors include methyl bromide, other alkyl halides, chloropicrin, sodium aluminum fluoride, sulfuryl fluoride, borax, boric acid, disodium octaborate, sodium metaborate, tartar emetic, dazomet, carbam (metam-ammonium), metam-sodium (carbam sodium), and methyl isothiocyanate.

Examples of the chordotonal organ TRPV channel modulators include pymetrozine, pyrifluquinazon, and afidopyropen.

Examples of the mite growth inhibitors affecting CHS1 include clofentezine, diflovidazin, hexythiazox, and etoxazole.

Examples of the microbial disruptors of insect midgut membranes include Bacillus thuringiensis subsp. israelensis, Bacillus thuringiensis subsp. aizawai, Bacillus thuringiensis subsp. kurstaki, Bacillus thuringiensis subsp. tenebrionis, proteins contained in B.t. crops (Cry1Ab, Cry1Ac, Cry1Fa, Cry1A. 105, Cry2Ab, Vip3A, mCry3A, Cry3Bb, and Cry34Ab1/Cry35Ab1), and Bacillus sphaericus.

Examples of the inhibitors of mitochondrial ATP synthase include diafenthiuron, azocyclotin, tricyclohexyltin hydroxide (cyhexatin), fenbutatin oxide, propargite (BPPS), and tetradifon.

Examples of the uncouplers of oxidative phosphorylation via disruption of proton gradient include chlorfenapyr, DNOC, and sulfluramid.

Examples of the nicotinic acetylcholine receptor (nAChR) channel blockers include bensultap, cartap hydrochloride, thiocyclam, thiosultap sodium, and monosultap.

Examples of the inhibitors of chitin biosynthesis affecting CHS1 include bistrifluron, chlorfluazuron, diflubenzuron, flucycloxuron, flufenoxuron, hexaflumuron, lufenuron, novaluron, noviflumuron, teflubenzuron, and triflumuron.

Examples of the inhibitors of chitin biosynthesis (type 1) include buprofezin.

Examples of the molting disruptors (dipteran) include cyromazine.

Examples of the molting hormone (ecdysone) receptor agonists include chromafenozide, halofenozide, methoxyfenozide, and tebufenozide.

Examples of the octopamine receptor agonists include amitraz.

Examples of the mitochondrial complex III electron transport inhibitors include hydramethylnon, acequinocyl, fluacrypyrim, flupyroxystrobin, and bifenazate.

Examples of the mitochondrial complex I electron transport inhibitors (METI) include fenazaquin, fenpyroximate, pyridaben, pyrimidifen, tebufenpyrad, tolfenpyrad, and derris (rotenone).

Examples of the voltage-dependent sodium channel blockers include indoxacarb and metaflumizone.

Examples of the inhibitors of acetyl CoA carboxylase include spirodiclofen, spiromesifen, spiropidion, spidoxamat, spirobudifen, and spirotetramat.

Examples of the mitochondrial complex IV electron transport inhibitors include aluminum phosphide, calcium phosphide, phosphine, zinc phosphide, prussic acid (calcium cyanide, sodium cyanide), and potassium cyanide.

Examples of the mitochondrial complex II electron transport inhibitors include cyenopyrafen, cyetpyrafen, cyflumetofen, pyflubumide, and cyclobutrifluram.

Examples of the ryanodine receptor modulators include chlorantraniliprole, cyantraniliprole, cyclaniliprole, flubendiamide, tetraniliprole, fluchlordiniliprole, thiorantraniliprole, pioxaniliprole, tetrachlorantraniliprole, cyhalodiamide, and cyproflanilide.

Examples of the chordotonal organ modulators include flonicamid.

Examples of the GABA-gated chloride channel allosteric modulators include broflanilide, fluxametamide, and isocycloseram.

Examples of the baculoviruses include codling moth (Cydia pomonella GV), false codling moth (Thaumatotibia leucotreta GV), velvetbean caterpillar (Anticarsis gemmatalis MNPV), and cotton bollworm (Helicoverpa armigera NPV).

Examples of other insecticides, miticides, and nematicides include azadirachtin, benzomate (benzoximate), phenisobromolate (bromopropylate), quinoxaline system (chinomethionat), kelthane (dicofol), lime sulfur, manzeb, pyridalyl, sulfur, acynonapyr, amidoflumet, benzpyrimoxan, fluazaindolizine, fluensulfone,fluhexafon, flupentiofenox, flometoquin, metaldehyde, tyclopyrazoflor, dimpropyridaz, trifluenfuronate, indazapyroxamet, sulfiflumin, bisulflufen, isoflualanam, piperflanilide, Burkholderia spp., Wolbachia pipientis (Zap), Chenopodium ambrosioides near ambrosioides extracts, fatty acid monoesters with glycerol or propanediol, neem oil, machine oil, rapeseed oil, blended oils, starch, saccharified reduced starch, sodium oleate, ferric phosphate, nemadectin, Beauveria bassiana strains, Metarhizium anisopliae strain (F52), Paecilomyces fumosoroseus Apopka strain (97), diatomaceous earth, dichlorodiisopropyl ether (DCIP), 1,3-dichloropropene (D-D), levamisole hydrochloride, morantel tartrate, and tioxazafen.

Examples of the herbicides include acetolactate synthesis (ALS) inhibitor compounds, amino acid-based compounds, cyclohexanedione-based compounds, acetamide-based compounds, bipyridinium-based compounds, allyloxyphenoxypropionic acid-based compounds, carbamate-based compounds, pyridine-based compounds, urea-based compounds, dinitroaniline-based compounds, protoporphyrinogen oxidase (PPO) inhibitor compounds, phenoxyacetic acid-based compounds, hydroxyphenylpyruvate dioxygenase enzyme (HPPD) inhibitor compounds, and triazine-based compounds.

Specific examples of the acetolactate synthesis (ALS) inhibitor compounds include imazamethabenz and imazamethabenz-methyl, imazamox, imazapic, imazapyr, imazaquin, imazethapyr, amidosulfuron, azimsulfuron, bensulfuron and bensulfuron-methyl, chlorimuron and chlorimuron-methyl, chlorimuron-ethyl, chlorsulfuron, cinosulfuron, cyclosulfamuron, ethametsulfuron and ethametsulfuron-methyl, ethoxysulfuron, flazasulfuron, flucetosulfuron, flupyrsulfuron, flupyrsulfuron-methyl and salts thereof, foramsulfuron, halosulfuron, halosulfuron-methyl, imazosulfuron, iodosulfuron and salts thereof, iodosulfuron-methyl and salts thereof, mesosulfuron, mesosulfuron-methyl, metazosulfuron, metsulfuron, metsulfuron-methyl, nicosulfuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron and salts thereof, triflusulfuron, triflusulfuron-methyl, tritosulfuron, imazamethabenz-methyl, bispyribac-sodium, cloransulam, cloransulam-methyl, diclosulam, florasulam, flucarbazone and salts thereof, flumetsulam, metosulam, orthosulfamuron, penoxsulam, pyroxsulam, propoxycarbazone and salts thereof, pyribenzoxim, pyriftalid, pyriminobac-methyl, pyrimisulfan, pyrithiobac and salts thereof, pyroxsulam, thiencarbazone, thiencarbazone-methyl, and triafamone.

Examples of the amino acid-based compounds include bialaphos and salts thereof, glufosinate and salts thereof, glufosinate P and salts thereof, and glyphosate and salts thereof.

Examples of the cyclohexanedione-based compounds include alloxydim, butroxydim, clethodim, cloproxydim, cycloxydim, profoxydim, sethoxydim, tepraloxydim, tralkoxydim, and feproxydim.

Examples of the acetamide-based compounds include napropamide, dimethachlor, pethoxamid, acetochlor, alachlor, allidochlor (CDAA), butenachlor, delachlor, diethatyl-ethyl, propisochlor, prynachlor, butachlor, dimethenamid, dimethenamid-P, metazachlor, metolachlor, S-metolachlor, pretilachlor, propachlor, thenylchlor, flufenacet, and mefenacet.

Examples of the bipyridylium-based compounds include cyperquat, morfamquat, diquat, and paraquat.

Examples of the allyloxyphenoxypropionic acid-based compounds include clodinafop, clodinafop-propargyl, clofop, cyhalofop-butyl, diclofop, diclofop-methyl, diclofop-P-methyl, fenoxaprop, fenoxaprop-ethyl, fenoxaprop-P-ethyl, fluazifop, fluazifop-butyl, fluazifop-P-butyl, haloxyfop, haloxyfop-methyl, haloxyfop-P-methyl, isoxapyrifop, metamifop, propaquizafop, quizalofop, quizalofop-ethyl, quizalofop-P-ethyl, and quizalofop-P-tefuryl.

Examples of the carbamate-based compounds include asulam, carbetamide, desmedipham, chlorprocarb, phenisopham, cycloate, dimepiperate, pebulate, tiocarbazil, vernolate, barban, chlorbufam, chlorpropham, propham, swep, phenmedipham, butylate, EPTC, esprocarb, molinate, orbencarb, prosulfocarb, pyributicarb, thiobencarb (benthiocarb) and tri-allate.

Examples of the pyridine-based compounds include aminopyralid, clopyralid, diflufenican, dithiopyr, fluridone, fluroxypyr, halauxifen, florpyrauxifen, picloram and salts thereof, picolinafen, thiazopyr, and triclopyr and salts thereof.

Examples of the urea-based compounds include benzothiazolone, bromuron, buturon, chlorbromuron, chloroxuron, difenoxuron, dimefuron, ethidimuron, fenuron, fluothiuron, metobenzuron, metobromuron, metoxuron, monolinuron, monuron (CMU), neburon, parafluron, siduron, thiazafluron, chlorotoluron, dymron, diuron (DCMU), fluometuron, isoproturon, linuron, methabenzthiazuron, tebuthiuron, cumyluron, karbutilate, and isouron.

Examples of the dinitroaniline-based compounds include benfluralin (bethrodine), butralin, dinitramine, ethalfluralin, fluchloralin, isopropalin, nitralin, profluralin, oryzalin, pendimethalin, prodiamine, and trifluralin.

Examples of the protoporphyrinogen oxidase (PPO) inhibitor compounds include acifluorfen, aclonifen, azafenidin, bifenox, chlomethoxynil, ethoxyfen, ethoxyfen-ethyl, fomesafen, fluazolate, fluoroglycofen, fluoroglycofen-ethyl, halosafen, lactofen, oxyfluorfen, butafenacil, epyrifenacil, chlornitrofen (CNP), fluorodifen, fluoronitrofen (CFNP), nitrofen (NIP), oxyfluorfen, chlorphthalim, flumipropyn, carfentrazone, carfentrazone-ethyl, cinidon-ethyl, flumiclorac-pentyl, flumioxazin, fluthiacet, fluthiacet-methyl, oxadiargyl, oxadiazon, pentoxazone, pyraclonil, pyraflufen, pyraflufen-ethyl, saflufenacil, sulfentrazone, thidiazimin, benzfendizone, profluazol, and flufenpyr-ethyl.

Examples of the phenoxyacetic acid-based compounds include 2,4,5-T, 2,4-D and salts thereof, 2,4-DB and salts thereof, clomeprop, dichlorprop, fenoprop, MCPA and salts thereof, MCPB and salts thereof, mecoprop (MCPP) and salts thereof, and mecoprop-P and salts thereof.

Examples of the hydroxyphenylpyruvate dioxygenase enzyme (HPPD) inhibitor compounds include benzobicyclon, benzofenap, bicyclopyrone, isoxaflutol, mesotrione, pyrasulfotol, pyrazolynate (pyrazolate), pyrazoxyfen, sulcotrione, tefuryltrione, tembotrione, topramezone, fenquinotrione, and tolpyralate.

Examples of the triazine-based compound include atraton, aziprotryn, chlorazine, cyprazine, desmetryn, dipropetryn, eglinazine-ethyl, ipazine, methoprotryne, procyazine, proglinazine, prometon, propazine, sebuthylazine, secbumeton, terbumeton, trietazine, ametryn, atrazine, cyanazine, dimethametryn, hexazinone, indaziflam, metamitron, metribuzin, prometryn, simazine (CAT), simetryn, terbuthylazine, terbutryn, and triaziflam.

Examples of the other herbicides include amicarbazone, ethiozin, isomethiozin, aminocyclopyrachlor, aminotriazole, anilofos, piperophos, beflubutamid, benazolin, benfuresate, bentazone, bromacil, isocil, bromobutide, bromofenoxim, bromoxynil, butamifos, DMPA, chlorthal-dimethyl (TCTP), cafenstrole, chloridazon (PAC), brompyrazon, chlorthal, clomazone, cumyluron, dicamba (MDBA) and salts thereof, chloramben, 2,3,8-TBA (TCBA), benazolin-ethyl, chlorfenac, chlorfenprop, dichlobenil (DBN), chlorthiamid (DCBN), cinmethylin, methiozolin, amitrol, flamprop-M, fosamine, methyldymron, monalide, MSMA, difenzoquat, diflufenzopyr, endothall and salts thereof, ethofumesate, etobenzanid, fenoxasulfone, fentrazamide, flupoxam, fluorochloridone, flurtamone, indanofan, tridiphane, ioxynil, ipfencarbazone, isoxaben, triaziflam, lenacil, methylarsonic acid, naptalam, flurochloridone, norflurazon, oxaziclomefone, pinoxaden, chloranocryl=dicryl, pentanochlor (CMMP), propanil, propyzamide, pyridate, pyroxasulfone, promacyl, quinclorac, quinmerac, quinoclamine, terbacil, cyclopyrimorate, florpyrauxifen-benzyl, lancotrione and salts thereof, cyclopyranil, bixlozone, tetflupyrolimet, dimesulfazet, dinosam, dinoseb (DNBP), DNOC, dinoterb, etinofen, medinoterb, DSMA, cacodylic acid, diphenamid, naproanilide, tebutam, bensulide, dalapon, TCA, mefluidide, perfluidone, CAMA, tiafenacil, trifludimoxazin, rimisoxafen, fenpyrazone, dioxopyritrione, cypyrafluone, bipyrazone, benquitrione, fluchloraminopyr, pyriflubenzoxim, flufenoximacil, iptriazopyrid, flusulfinam, broclozone, indolauxypyr, icafolin, pyraquinate, metproxybicyclone, tetrapion (flupropanate) and salts thereof, and d-limonene.

### Content

The content of the active component in the formulation can be arbitrarily determined depending on the form, the amount to be applied to a plant, and the like. For example, the formulation preferably contains the active component in an amount of 0.01 wt.% or more and 90 wt.% or less, and more preferably 0.1 wt.% or more and 50 wt.% or less, relative to the total mass of the formulation.

The formulation may be used as the treatment agent as it is, or may be used as the treatment agent prepared by, for example, arbitrarily mixing it with the above-mentioned formulation aids or other active ingredients.

### Production Method

The agent for improving damage recoverability and the agent for improving physical stress tolerance can be prepared by a common method using the active component. At the time, a solid carrier or a liquid carrier may be used to prepare the formulation having a predetermined form. Note that as the active component, an extract of a microorganism, a plant, or a seaweed containing the active component may be used. Alternatively, an extract of a microorganism, a plant, or a seaweed containing the active component may be used as the agent for improving damage recoverability or the agent for improving physical stress tolerance.

Note that the active component may be stored and transported in a mixed state, or the component may be stored in a first container and another active ingredient may be stored in a second container to be stored and transported in a separate and independent state in which the component and the active ingredient are not mixed. In addition, the first container containing the active component and the second container containing another active ingredient may be packaged (kitted) as a product.

### Method for Improving Damage Recoverability or Physical Stress Tolerance of Plant

The agent for improving damage recoverability and the agent for improving physical stress tolerance or the formulation containing the same, which are described above, can be used for improving damage recoverability or improving physical stress tolerance of a plant by applying the agent or the formulation to the plant prepared in advance.

The method of application is not particularly limited, and application may be performed by any method such as foliar spraying, mixing into water supply, soil application, injection to subsoil using an injector, treatment of seeds, bulbs, tubers, and the like (propagules), or direct fertilization to plants.

When it is mixed into water supply, for example, the formulation only needs to be administered as granules or a treatment liquid to water supply to a crop or to paddy water of a paddy field. For example, the concentration of the active component in the water supply to a crop can be 0.1 mg/L or more, and is preferably 1 mg/L or more. When administered to paddy water, the dosage amount of the active component can be 0.1 g or more, and is preferably 1 g or more, per 10 a of paddy field.

When foliar spraying or soil application is performed, for example, a granule or the like is administered to a planting hole or its periphery at the time of seedling transplantation or the like, or a granule, a wettable powder, or the like is administered to a plant body including a seed or the like, or soil around a plant body. After soil application, the soil and the formulation may be mixed. The dosage amount of the active component when foliar spraying or spraying to soil surface is performed can be 0.1 mg or more, and is preferably 1 mg or more, per 1 m² of an agricultural or horticultural land.

When the propagule is treated, for example, the propagule is mixed with a wettable powder or a dustable powder and stirred, or the propagule is immersed in a diluted wettable powder or the like. The propagule may also be coated with the formulation containing a solid carrier. The amount of the active component used at the time of treating the propagule can be 0.005 g or more, and is preferably 0.05 g or more, relative to 100 kg of seeds.

For improving recoverability from a damage, the treatment agent may be applied before the damage is expected to occur (for example, before turfgrass is mowed) or after the damage occurs (for example, after turfgrass is mowed).

The treated plant can be grown under normal conditions for the growth of the plant. The plant thus grown may be further grown by transplanting a transplanting seedling grown to a certain extent into another soil or medium.

### Other embodiments

Note that the above-described embodiment is an exemplary embodiment of the present invention, and it is needless to say that the present invention can include embodiments other than the above-described embodiment within the scope of the core technical idea thereof.

### [Examples]

The present invention will be described in detail below based on examples, but the present invention is not limited to these examples.

### Evaluation Example 1: Comparison of recoverability from damage due to over-mowing

The treatment agents of Example 1 and Comparative Examples 1 and 2 were prepared to have the concentrations shown in Table 1 below. Commercially available products of ergothioneine (EGT) and glycine betaine (GB) were used, and pure water was used as a solvent.

Evaluation was performed using turfgrass (Kentucky bluegrass). Cut turfgrass of about 250 mm by about 550 mm was prepared and placed in a seedling raising box of about 280 mm by about 580 mm.

During the period from early September 2023 to late September 2023, the turfgrass was managed outdoors at the Central Research Center of Kureha Corporation (Iwaki City, Fukushima), and water was supplied by natural rainfall and sprinkle water. 250 mL of the treatment agent was added to the soil portion instead of sprinkle water, and one day after that, the turfgrass was cut for mowing by a length of 1/3 or more of the height thereof in such a manner that the growing point of the turfgrass was cut off. Day 16 after the mowing, the turfgrass was photographed with a digital camera, and the photographed picture was analyzed with image analysis software WinROOF (available from Mitani Corporation) to quantify a green area. The mortality rate of the turfgrass was calculated from the percentage of the green area.

Then, the recovery ratio from a damage was evaluated from the mortality rate of the turfgrass. The evaluation results are indicated in Table 1. The recovery ratio from a damage (evaluation value) was calculated according to the following equation. $\begin{matrix}Recovery ratio from damage \left(evaluation value\right) \left(%\right) \\ = \left\{1-\left(\begin{matrix}mortality rate of test compound - treated section / mortality rate of non - \\ treated section\end{matrix}\right)\right\} \times 100\end{matrix}$

**[Table 1]**

| | EGT | GB | Mortality rate | Recovery ratio from damage |
|---|---|---|---|---|
| | mM | mM | | |
| Comparative Example 1 | | | 86% | - |
| Comparative Example 2 | | 0.5 | 62% | 28% |
| Example 1 | 0.5 | | 43% | 50% |

As shown in Table 1, when the turfgrass whose 86% would die due to over-mowing (Comparative Example 1) was treated with the treatment agent containing ergothioneine (EGT), the mortality rate was 43% (the recovery ratio from the damage was 50%). From this result, it can be seen that the treatment agent of Example 1 had an effect of improving the recoverability of a plant from a damage.

On the other hand, even when treatment was performed with a treatment agent containing glycine betaine (GB) described in Patent Document 1 as having an effect of improving stress tolerance, the mortality rate was only 62% (the recovery ratio from the damage was 28%). From this result, it can also be seen that a biostimulant such as glycine betaine (GB) did not always have a recovery effect from damage, and the recovery effect from a damage in Example 1 is an effect unique to this treatment agent.

### Evaluation Example 2: Comparison of tolerance to stress by foot pressure

The treatment agents of Example 1 and Comparative Examples 1 and 2 were prepared to have the concentrations shown in Table 1 below. Commercially available products of ergothioneine (EGT) and glycine betaine (GB) were used, and pure water was used as a solvent.

Evaluation was performed using turfgrass (Kentucky bluegrass). Cut turfgrass of about 250 mm by about 550 mm was prepared and placed in a seedling raising box of about 280 mm by about 580 mm.

During the period from early September 2023 to late September 2023, the turfgrass was managed outdoors at the Central Research Center of Kureha Corporation (Iwaki City, Fukushima), and water was supplied by natural rainfall and sprinkle water. 250 mL of the treatment agent was added to the soil portion instead of sprinkle water, and for 10 days from one day after that, a total of 100 steps were applied to the entire surface of the turfgrass every day. Stepping was performed by a person weighing about 75 kg who wore rubber-bottomed shoes. 12 days after completion of stepping, the turfgrass was photographed with a digital camera, and the photographed picture was analyzed with image analysis software WinROOF (available from Mitani Corporation) to quantify a green area. The mortality rate of the turfgrass was calculated from the percentage of the green area.

Then, the physical stress suppression ratio was evaluated from the mortality rate of the turfgrass. The evaluation results are indicated in Table 2. The physical stress suppression ratio (evaluation value) was calculated according to the following equation. $\begin{matrix}Physical stress suppression ratio \left(evaluation value\right) \left(%\right) \\ = \left\{1-\left(\begin{matrix}mortality rate of test compound - treated section / mortality rate of non - \\ treated section\end{matrix}\right)\right\} \times 100\end{matrix}$

**[Table 2]**

| | EGT | GB | Mortality rate | Physical stress suppression ratio |
|---|---|---|---|---|
| | mM | mM | | |
| Comparative Example 3 | | | 27% | - |
| Comparative Example 4 | | 0.5 | 22% | 19% |
| Example 2 | 0.5 | | 11% | 59% |

As shown in Table 2, when the turfgrass whose 27% would die due to excessive foot pressure (Comparative Example 3) was treated with the treatment agent containing ergothioneine (EGT), the mortality rate was 11% (the physical stress suppression ratio was 59%). From this result, it can be seen that the treatment agent of Example 2 had an effect of improving physical stress tolerance.

On the other hand, even when treatment was performed with a treatment agent containing glycine betaine (GB) described in Patent Document 1 as having an effect of improving stress tolerance, the mortality rate was only 22%, and the physical stress suppression ratio was only 19%. From this result, it can be seen that glycine betaine (GB), which is a biostimulant that improves stress tolerance due to insufficient watering, did not necessarily have an effect of improving physical stress tolerance, and the effect of the biostimulant may vary depending on the type of stress. It can also be seen that the effect of improving physical stress tolerance in Example 2 is an effect unique to this treatment agent.

### Evaluation Example 3: Comparison of recoverability from damage due to over-mowing

The treatment agents of Example 3 and Comparative Examples 5 and 6 were prepared to have the concentrations shown in Table 3 below. Commercially available products of ergothioneine (EGT) and glycine betaine (GB) were used, and pure water was used as a solvent.

Evaluation was performed using turfgrass (Korean grass). Cut turfgrass of about 180 mm by about 270 mm was prepared and placed in a seedling raising box.

The box was managed in a greenhouse set at a room temperature of 25°C and water is supplied by sprinkle water. 200 mL of the treatment agent was added to the soil portion instead of sprinkle water, and one day after that, the turfgrass was cut for mowing by a length of 1/7 or more of the height thereof in such a manner that the growing point of the turfgrass was cut off. 5 days after mowing, the turfgrass was photographed with a digital camera, and the photographed picture was analyzed with image analysis software WinROOF (available from Mitani Corporation) to quantify a green area. The mortality rate of the turfgrass was calculated from the percentage of the green area.

Then, the recovery ratio from a damage was evaluated from the mortality rate of the turfgrass. The evaluation results are indicated in Table 3. The recovery ratio from a damage (evaluation value) was calculated according to the following equation. $\begin{matrix}Recovery ratio from damage \left(evaluation value\right) \left(%\right) \\ = \left\{1-\left(\begin{matrix}mortality rate of test compound - treated section / mortality rate of non - \\ treated section\end{matrix}\right)\right\} \times 100\end{matrix}$

**[Table 3]**

| | EGT | GB | Mortality rate | Recovery ratio from damage |
|---|---|---|---|---|
| | mM | mM | | |
| Comparative Example 5 | | | 50% | - |
| Comparative Example 6 | | 0.5 | 53% | 0% |
| Example 3 | 0.5 | | 29% | 42% |

As shown in Table 3, when the turfgrass whose 50% would die due to over-mowing (Comparative Example 5) was treated with the treatment agent containing ergothioneine (EGT), the mortality rate was 29% (the recovery ratio from the damage was 42%). From this result, it can be seen that the treatment agent of Example 3 had an effect of improving the recoverability of a plant from a damage.

On the other hand, even when treatment was performed with a treatment agent containing glycine betaine (GB) described in Patent Document 1 as having an effect of improving stress tolerance, the mortality rate is only 53% (the recovery ratio from the damage was 0%). From this result, it can also be seen that a biostimulant such as glycine betaine (GB) did not always have a recovery effect from damage, and the recovery effect from a damage in Example 3 is an effect unique to this treatment agent.

### Evaluation Example 4: Comparison of recoverability from damage due to over-mowing

The treatment agents of Example 4 and Comparative Examples 7 and 8 were prepared to have the concentrations shown in Table 4 below. Commercially available products of ergothioneine (EGT) and glycine betaine (GB) were used, and pure water was used as a solvent.

Evaluation was performed using turfgrass (bentgrass). Cut turfgrass of about 180 mm by about 270 mm was prepared and placed in a seedling raising box.

The box was managed in a greenhouse set at a room temperature of 25°C and water is supplied by sprinkle water. 200 mL of the treatment agent was added to the soil portion instead of sprinkle water, and one day after that, the turfgrass was cut for mowing by a length of 1/10 or more of the height thereof in such a manner that the growing point of the turfgrass was cut off. 5 days after mowing, the turfgrass was photographed with a digital camera, and the photographed picture was analyzed with image analysis software WinROOF (available from Mitani Corporation) to quantify a green area. The mortality rate of the turfgrass was calculated from the percentage of the green area.

Then, the recovery ratio from a damage was evaluated from the mortality rate of the turfgrass. The evaluation results are indicated in Table 4. The recovery ratio from a damage (evaluation value) was calculated according to the following equation. $\begin{matrix}Recovery ratio from damage \left(evaluation value\right) \left(%\right) \\ = \left\{1-\left(\begin{matrix}mortality rate of test compound - treated section / mortality rate of non - \\ treated section\end{matrix}\right)\right\} \times 100\end{matrix}$

**[Table 4]**

| | EGT | GB | Mortality rate | Recovery ratio from damage |
|---|---|---|---|---|
| | mM | mM | | |
| Comparative Example 7 | | | 82% | - |
| Comparative Example 8 | | 0.5 | 92% | 0% |
| Example 4 | 0.5 | | 53% | 35% |

As shown in Table 4, when the turfgrass whose 82% would die due to over-mowing (Comparative Example 7) was treated with the treatment agent containing ergothioneine (EGT), the mortality rate was 53% (the recovery ratio from the damage was 35%). From this result, it can be seen that the treatment agent of Example 4 had an effect of improving the recoverability of a plant from a damage.

On the other hand, even when treatment was performed with a treatment agent containing glycine betaine (GB) described in Patent Document 1 as having an effect of improving stress tolerance, the mortality rate was only 92% (the recovery ratio from the damage was 0%). From this result, it can also be seen that a biostimulant such as glycine betaine (GB) did not always have a recovery effect from damage, and the recovery effect from a damage in Example 4 is an effect unique to this treatment agent.

### Evaluation Example 5: Comparison of tolerance to stress by foot pressure

The treatment agents of Example 5 and Comparative Examples 7 and 8 were prepared to have the concentrations shown in Table 5 below. Commercially available products of ergothioneine (EGT) and glycine betaine (GB) were used, and pure water was used as a solvent.

Evaluation was performed using Phyla nodiflora (Kurapia K7). In a planter of 370 mm by 640 mm and a depth of 145 mm, soil obtained by mixing 3 kg of seedling raising soil (available from TAKII & CO., LTD.) and 1 kg of black soil was placed, and Phyla nodiflora seedlings of 90 mm square were planted.

The planter was managed in a greenhouse set at a room temperature of 25°C and water is supplied by sprinkle water. 50 mL of the treatment agent was added to the soil portion instead of sprinkle water, and for 11 days from one day after that, a total of 100 steps were applied to the entire surface of the Phyla nodiflora every day. Stepping was performed by a person weighing about 75 kg who wore rubber-bottomed shoes. One day after completion of stepping, the Phyla nodiflora was photographed with a digital camera, and the photographed picture was analyzed with image analysis software WinROOF (available from Mitani Corporation) to quantify a green area. The mortality rate of the Phyla nodiflora was calculated from the percentage of the green area.

Then, the physical stress suppression ratio was evaluated from the mortality rate of the Phyla nodiflora. The evaluation results are indicated in Table 5. The physical stress suppression ratio (evaluation value) was calculated according to the following equation. $\begin{matrix}Physical stress suppression ratio \left(evaluation value\right) \left(%\right) \\ = \left\{1-\left(\begin{matrix}mortality rate of test compound - treated section / mortality rate of non - \\ treated section\end{matrix}\right)\right\} \times 100\end{matrix}$

**[Table 5]**

| | EGT | GB | Mortality rate | Physical stress suppression ratio |
|---|---|---|---|---|
| | mM | mM | | |
| Comparative Example 7 | | | 39% | - |
| Comparative Example 8 | | 0.1 | 38% | 1% |
| Example 5 | 0.1 | | 19% | 50% |

As shown in Table 5, when the Phyla nodiflora whose 39% would die due to excessive foot pressure (Comparative Example 7) was treated with the treatment agent containing ergothioneine (EGT), the mortality rate was 19% (the physical stress suppression ratio was 50%) in Example 5. From this result, it can be seen that the treatment agent of Example 5 had an effect of improving physical stress tolerance.

On the other hand, even when treatment was performed with a treatment agent containing glycine betaine (GB) described in Patent Document 1 as having an effect of improving stress tolerance, the mortality rate was only 38%, and the physical stress suppression ratio was only 1% in Example 8. From this result, it can be seen that glycine betaine (GB), which is a biostimulant that improves stress tolerance due to insufficient watering, did not necessarily have an effect of improving physical stress tolerance, and the effect of the biostimulant may vary depending on the type of stress. It can also be seen that the effect of improving physical stress tolerance in Example 5 is an effect unique to this treatment agent.

This application claims the priority to Japanese Patent Application No. 2023-197535 filed on November 21, 2023. The original specification of the application, and the matters described in the claims are hereby incorporated by reference into the present application.

### [Industrial Applicability]

According to the present invention, it is possible to enhance recoverability from a damage and improvement of tolerance to physical stress of a plant to promote efficient utilization of the plant.

## Claims

1. An agent for improving damage recoverability of a plant, the agent comprising
an active component which is a compound represented by Formula (I) below or its tautomer, or an agronomically acceptable salt thereof: 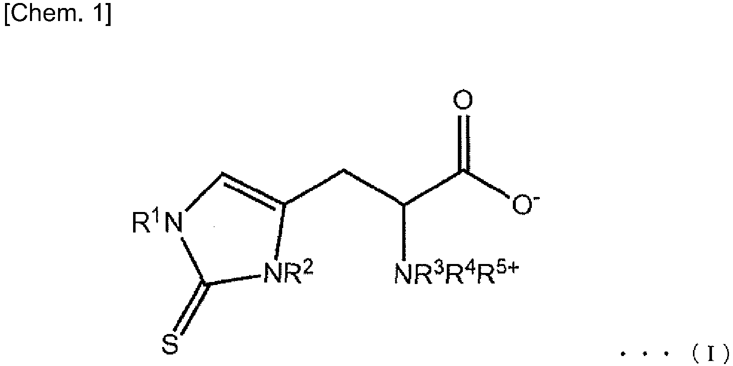
where in Formula (I), R¹ and R² each independently represent a hydrogen atom or an alkyl group having from 1 to 4 carbons, and R³, R⁴, and R⁵ each independently represent an alkyl group having from 1 to 4 carbons.

2. The agent for improving damage recoverability of a plant according to claim 1, wherein
the compound represented by Formula (I) is ergothioneine.

3. A formulation for improving damage recoverability of a plant, the formulation comprising
an active component which is a compound represented by Formula (I) below or its tautomer, or an agronomically acceptable salt thereof: 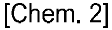 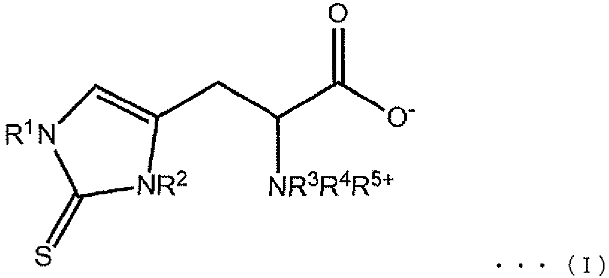
where in Formula (I), R¹ and R² each independently represent a hydrogen atom or an alkyl group having from 1 to 4 carbons, and R³, R⁴, and R⁵ each independently represent an alkyl group having from 1 to 4 carbons.

4. A method for improving damage recoverability of a plant, the method comprising applying a treatment agent containing the formulation described in claim 3 to the plant.

5. A plant body treated with a treatment agent containing the formulation described in claim 3 and having enhanced damage recoverability.

6. The plant body according to claim 5, being
a propagule or a transplanting seedling.

7. The plant body according to claim 5, being
turfgrass.

8. An agent for improving physical stress tolerance of a plant, the agent comprising
an active component which is a compound represented by Formula (I) below or its tautomer, or an agronomically acceptable salt thereof: 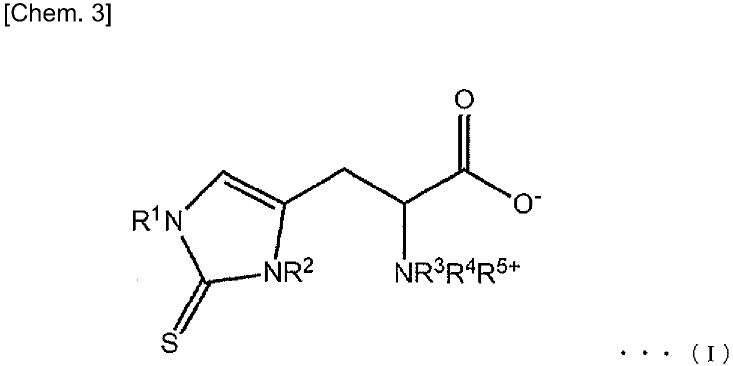
where in Formula (I), R¹ and R² each independently represent a hydrogen atom or an alkyl group having from 1 to 4 carbons, and R³, R⁴, and R⁵ each independently represent an alkyl group having from 1 to 4 carbons.
